# FASCICULE DE BREVET EUROPEEN

(11) **EP 1 146 100 B1**
(45) Date de publication et mention de la délivrance du brevet: **04.08.2004**
(21) Numéro de dépôt: 01400700.9
(22) Date de dépôt: 16.03.2001
(51) Int. Cl.: C09J 123/10, B32B 31/00

(54) **Emballage comprenant une couche de liant indélaminable sur substrat métallisé et pelable sur substrat polypropylénique**
Verpackung, die nicht gegenüber Metall, aber gegenüber Polypropylen delaminierbar ist
Package being non-delaminable to a metal substrat and peelable to polypropylene

(30) Priorité: 30.03.2000 FR 0004037; 06.07.2000 FR 0008790
(43) Date de publication de la demande: 17.10.2001
(73) Titulaire: Atofina, 92091 Paris La Défense Cedex (FR)
(72) Inventeur: Ledu, Yves, 27300 Valailles (FR); Perret, Patrice, 78970 Mezières sur Seine (FR)

(56) Documents cités:
- EP-A- 0 258 990
- EP-A- 0 312 302
- EP-A- 0 485 126
- JP-A- 1 082 931
- US-A- 4 764 546
- US-A- 5 235 149
- DATABASE WPI Derwent Publications Ltd., London, GB; AN 1992-288980 XP002151570 & JP 04 198243 A (SHOWA DENKO), 17 juillet 1992 (1992-07-17)
- DATABASE WPI Derwent Publications Ltd., London, GB; AN 1989-136182 XP002151571 & JP 01 082931 A (SEKISUI), 28 mars 1989 (1989-03-28)

## Description

La présente invention concerne une emballage un opercule soudé sur une baguette comprenant une couche de liant à base de polypropylène, extrudable par couchage à grande vitesse sur une feuille métallique ou de substrat métallisé, présentant un caractère indélaminable vis à vis d'une couche totalement ou partiellement métallique et présentant un caractère pelable vis à vis d'une couche de polypropylène.

La présente invention concerne également son utilisation dans la fabrication d'emballages métalloplastiques tels que les boîtes de boisson, les boîtes de conserve, les bombes aérosol, les pots de peinture, les barquettes et opercules alimentaires entre autre.

Le brevet US 5 235 149 décrit des emballages fermés par des opercules. La couche de liant de l'opercule est constituée de différents polymères greffés par l'acide acrylique ou l'anhydride maléique, les polymères peuvent être choisis parmi le polyéthylène, le polypropylène, les copolymères de l'éthylène et de l'acétate de vinyle et les copolymères de l'éthylène et de l'acrylate de méthyle.

Le brevet DE 19 535 915 A décrit du polypropylène bloc copolymère greffé pour coller des films de polypropylène sur des feuilles métalliques.

Le brevet EP 689 505 décrit des structures semblables à celles décrites dans le brevet précédent mais qui sont utilisées pour faire des emballages alimentaires.

Le brevet EP 658 139 décrit des structures semblables à celles décrites dans le brevet précédent mais le liant est un polypropylène copolymère statistique greffé comprenant de 1 à 10% de comonomère, le rapport Mw/Mn est compris entre 2 et 10 et le MFI (Melt flow Index ou indice de fluidité à l'état fondu) est compris entre 1 et 20 g/10 min (à 230°C sous 2,16kg).

JP4198243 est relatif à une composition de liant utile por fabriquer des structures couche de liant/couche de métal indélaminables. La composition divulguèe comprend polypropyléne modifié, polypropyléne non-modifié, LDPE et terpolymère ethylène, maleic anhydride et ethylacrylate

US4764546 est relatif au revêtement de pièces automobiles qui comprend polypropyléne modifié, polypropyléne non-modifié et terpolymère ethylène, maleic anhydride et ethylacrylate et 5-40% de charge

Un emballage présentant une barquette et un opercule comme moyen d'ouverture doit être facile à ouvrir, donc facilement pelable et cette ouverture doit se faire proprement et nettement. Or, le pelage, dépendant de la nature du liant utilisé pour lier l'opercule à la barquette, ne se fait pas toujours correctement et on observe des déchirures ou délamination de l'opercule. Parfois, on constate que la fermeture des barquettes par un opercule n'est pas parfaite ce qui peut conduire à une dégradation de son contenu. De plus les liants de l'art antérieur ne permettent pas une production à grande vitesse des opercules.

On a maintenant trouvé une nouvelle emballage présentant un liant qui a de bonnes performances adhésives sur les métaux (Aluminium, acier, fer blanc, substrats métallisés) grâce à un traitement thermique à haute température, qui a une excellente aptitude à la coextrusion couchage à haute vitesse et qui a de bonnes caractéristiques de scellage/pelage sur support polypropylènique. La structure de l'emballage permet d'obtenir un excellent scellage de l'opercule garantissant une bonne étanchéité des emballages et un pelage de l'opercule facile, propre et net grâce au caractère indélaminable entre la couche métallique ou de substrat métallisé et la couche de liant et grâce au caractère pelable entre la couche de liant et la couche polypropylènique.

De plus, la nouvelle structure d'emballage a pour avantages de permettre la fabrication d'emballages stérilisables, résistants chimiquement aux graisses, acides et solvants que l'on peut rencontrer dans le cadre de l'utilisation de ces emballages.

Les mesures des MFI des composés décrits ci-dessous ont été faites selon la norme NFT51016 ou ISO1133.

L'invention a pour objet un emballage comprenant un opercule (4) soudé sur une barquette (3) en polypropylène ou en matériau recouvert d'une couche (2) de polypropylène, l'opercule (4) comprenant une structure multicouche comprenant une couche métallique ou une couche d'un substrat métallisé (5) et une couche de liant (6) de coextrusion couchage, cette dernière étant prise en sandwich entre la couche métallique ou de substrat métallisé (5) et la barquette (3) en polypropylène ou la couche de polypropylène (2) de la barquette (3), ledit liant comprenant:
- 5 à 30% en poids d'un copolymère à base d'éthylène (A) avec un ou des comonomères choisis parmi le groupe des esters d'acides carboxyliques, des esters vinyliques et des diènes ;
- 40 à 93% en poids d'un polypropylène (B) homopolymère, de qualité dite « extrusion couchage », étirable, l'étirabilité étant définie comme la non rupture d'un jonc extrudé à une température entre 190°C et 240°C et soumis à une traction à une vitesse de tirage entre 50 et 250 m/min et ayant un MFI entre 20 et 40 g/10 min (à 230°C sous 2,16 kg);
- 2 à 30% en poids d'un polypropylène (C) fonctionnalisé par un anhydride d'acide carboxylique insaturé ;
le MFI, indice de fluidité à l'état fondu de la composition étant compris entre 10 et 50 g/ 10 min (à 230°C sous 2,16kg)
l'opercule (4) étant pelable par une rupture cohésive dans la couche dudit liant (6) au niveau de sa zone de soudure dudit opercule sur la barquette.

La structure multicouche comprend une couche métallique ou une couche d'un substrat métallisé et une couche de liant, à base de polypropylène, extrudé par couchage à une vitesse supérieure à 100 m/min sur ladite couche métallique ou de substrat métallisé, lesdites couches étant rendues indélaminables par traitement thermique de ladite structure.

Selon un mode de réalisation de la structure, le traitement thermique est réalisé par rayonnement infra rouge, par passage dans un tunnel d'air chaud ou par induction, la couche métallique étant chauffée à une température supérieure à la température de fusion du liant.

Selon un mode de réalisation de la structure, ladite structure comprend une couche de polypropylène présentant une température de fusion supérieure à la température de fusion du liant, la couche de liant étant prise en sandwich entre la couche métallique ou de substrat métallisé et la couche de polypropylène.

Selon un mode de réalisation de la structure, ladite structure est pelable avec une force de pelage entre la couche de liant et la couche de polypropylène comprise entre 8 et 15 N/15mm.

Le liant extrudable comprend en poids :
- 5 à 30% d'un copolymère à base d'éthylène (A) avec un ou des comonomères choisis parmi le groupe des esters d'acides carboxyliques, des esters vinyliques et des diènes ;
- 40 à 93% d'un polypropylène (B) étirable, l'étirabilité étant définie comme la non rupture d'un jonc extrudé à une température entre 190°C et 240°C et soumis à une traction à une vitesse de tirage entre 50 et 250 m/min ;
- 2 à 30% d'un polypropylène (C) fonctionnalisé par un anhydride d'acide carboxylique insaturé ;
   le MFI de la composition étant compris entre 10 et 50 g/ 10 min (à 230°C sous 2,16kg).

Selon un mode de réalisation de la structure, le copolymère (A) du liant est un copolymère éthylène/(méth)acrylate d'alkyle comprenant de 5 à 40 % et de préférence de 10 à 40 % en poids de (méth)acrylate d'alkyle, le MFI étant compris entre 0,5 et 200 g/10min (à 190°C sous 2,16 kg).

Selon un mode de réalisation de la structure, le copolymère (A) du liant est un copolymère éthylène/(méth)acrylate d'alkyle/anhydride maléique comprenant de 0 à 10 % en poids d'anhydride maléique, de 2 à 40 et de préférence de 5 à 40 % en poids de (méth)acrylate d'alkyle, le MFI étant compris entre 0,5 et 200 g/10min (à 190°C sous 2,16 kg).

Selon un mode de réalisation de la structure, le copolymère (A) du liant est un mélange des copolymères (A) décrits ci-dessus.

Selon un mode de réalisation de la structure, la proportion de polypropylène (C) du liant est comprise entre 1,5 et 6%, ledit polypropylène (C) comprenant 1,5 à 6% en poids d'anhydride maléique.

Selon un mode de réalisation de la structure, la proportion de polypropylène (C) du liant est comprise entre 10 et 25%, ledit polypropylène (C) comprenant 0,8 à 1,5% en poids d'anhydride maléique.

Selon un mode de réalisation de la structure, la proportion de polypropylène (C) du liant est comprise entre 3 et 5 %, ledit polypropylène (C) comprenant de 1,5 à 3 % en poids d'anhydride maléique.

L'invention est également relative à un opercule comprenant une structure telle que décrite ci-dessus dans laquelle le métal de la couche métallique ou de la couche de substrat métallisé est l'aluminium.

L'invention est également relative à un emballage en polypropylène ou en un matériau recouvert de polypropylène fermé par un opercule tel que décrit précédemment.

Selon un mode de réalisation de l'emballage, celui-ci est stérilisable et résistant aux acides alimentaires, graisses et solvants techniques.

La figure 1a représente en coupe une partie d'un emballage alimentaire fermé comprenant un opercule présentant une structure bicouche selon l'invention.

La figure 1b représente en coupe une partie d'un emballage alimentaire fermé comprenant un opercule présentant une structure tricouche selon un mode de réalisation de l'invention.

La figure 2a représente en coupe l'emballage de la figure 1a partiellement ouvert.

La figure 2b représente en coupe l'emballage de la figure 1b partiellement ouvert.

Nous allons pour la suite décrire un emballage alimentaire comprenant un opercule et une barquette, ledit opercule présentant une structure selon l'invention. Il est clair que l'invention est applicable à tout type d'emballage et ne se limite pas aux seuls emballages alimentaires.

Un emballage d'aliments solides se compose en général d'une barquette (3) et d'un opercule (4). La barquette (3) est obturée par l'opercule (4) lorsque l'emballage est en position fermée.

La barquette (3) peut être en polypropylène ou en un autre matériau éventuellement multicouche. Lorsque la barquette (3) est multicouche, elle comprend alors une couche externe (1), d'aluminium par exemple, recouverte d'une couche interne de polypropylène (2), la couche interne étant en contact direct avec l'aliment contrairement à la couche externe.

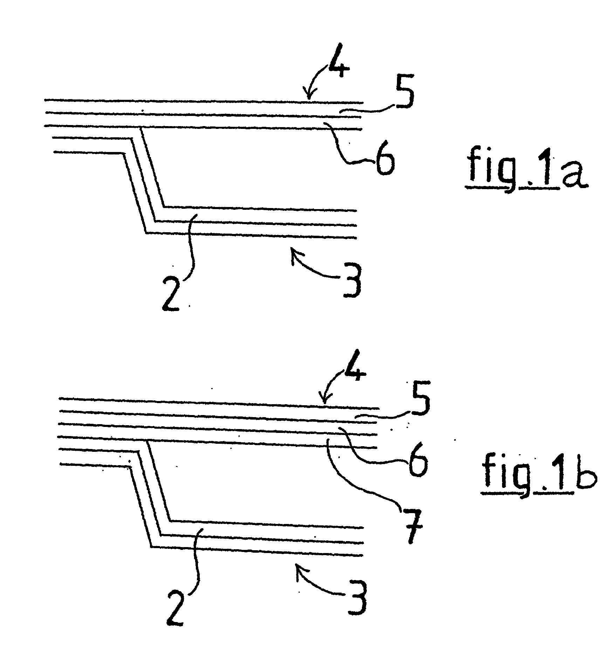

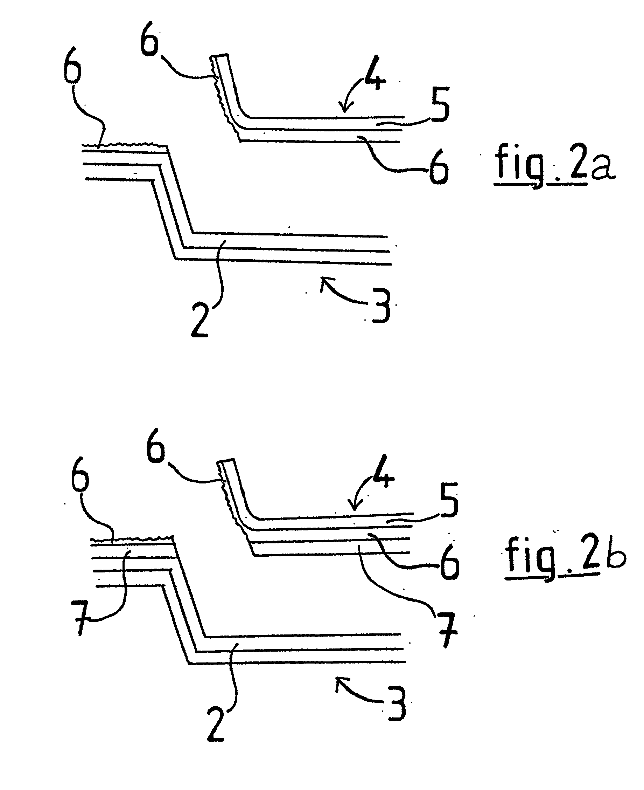

L'opercule (4) est constitué de couches solidaires les unes des autres qui sont dans l'ordre : une couche métallique ou de substrat métallisé (5), une couche de liant (6) tel que représenté sur la figure 1a et éventuellement une couche de polypropylène (7) tel que représenté sur la figure 1b. L'opercule est soudé à chaud du coté du liant (6), ou éventuellement du côté du polypropylène (7) lorsque celui-ci est présent, contre la couche de polypropylène (2) de la barquette (3), en général sur son pourtour. On laisse dépasser une partie de l'opercule (4) au-delà de la surface d'ouverture de la barquette (3) pour pouvoir saisir facilement celui-ci avec la main et ouvrir l'emballage. En tirant sur l'opercule (4), on engage au niveau de la soudure, une rupture cohésive à l'intérieur de la couche de liant (6) de l'opercule (4). La couche de liant (6) et éventuellement la couche de polypropylène (7) se déchire interrompant la rupture cohésive. On obtient alors l'opercule et la barquette représentés sur les figures 2a et 2b.

Il reste au niveau de la soudure sur la barquette (3) de l'emballage ouvert un peu de liant (6) et éventuellement la couche de polypropylène (7). Il reste au niveau de la soudure sur l'opercule (4) un peu de liant (6) et la couche d'aluminium (5) (voir figure 2a et 2b). Aux endroits où l'opercule (4) n'était pas soudé à la barquette (3), on retrouve la structure initiale de l'opercule : couche d' aluminium (5) solidarisée à la couche de liant (6) elle-même éventuellement solidarisée à une couche de polypropylène (7).

Le liant (6) permet l'adhérence de l'opercule (4) sur la barquette (3) et permet également la pelabilité de l'opercule sans qu'il soit nécessaire de faire usage d'une force importante. Un enfant doit être en effet en mesure de tirer sur l'opercule et d'ouvrir l'emballage.

L'opercule (4) est fabriqué par coextrusion de la couche de liant (6) et de l'éventuelle couche de polypropylène (7) suivie immédiatement de leur couchage sur la feuille d'aluminium (5) ou tout autre substrat métallisé. Une fois la barquette remplie, l'opercule (4) est fixé par soudage à chaud sur les bords de la barquette (3).

Selon la nature des aliments et la nature des impuretés éventuelles contenues dans le liant (6), on peut utiliser des opercules ne comprenant pas la couche de polypropylène (7).

Le liant (6) extrudable, comprend en poids, le total étant 100% :
- 5 à 30% d'un copolymère à base d'éthylène (A) avec un ou des comonomères choisis parmi le groupe des esters d'acides carboxyliques, des esters vinyliques et des diènes ;
- 40 à 93% d'un polypropylène (B) étirable, l'étirabilité étant définie comme la non rupture d'un jonc extrudé à une température entre 190°C et 240°C et soumis à une traction à une vitesse de tirage entre 50 et 250 m/min ;
- 2 à 30% d'un polypropylène (C) fonctionnalisé par un anhydride d'acide carboxylique insaturé ;
le MFI de la composition étant compris entre 10 et 50 g/ 10 min ( à 230°C sous 2,16kg).

S'agissant du copolymère à base d'éthylène (A), à titre de comonomères, on peut citer :
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de méthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyéthylène peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0,86 et 0,98 g/cm³. Le MFI (indice de fluidité à l'état fondu, à 190°C sous 2,16 kg) est compris avantageusement entre 0,1 et 1000 g/10 min.

A titre d'exemple de polyéthylènes on peut citer :
- le polyéthylène linéaire basse densité (LLDPE) ;
- le polyéthylène très basse densité (VLDPE) ;
- le polyéthylène obtenu par catalyse métallocène en présence d'un catalyseur mono site constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés ;
- les élastomères EPR (éthylène - propylène - rubber) ;
- les élastomères EPDM (éthylène - propylène - diène) ;
- les mélanges de polyéthylène avec un EPR ou un EPDM.

A titre d'exemple, on peut citer les copolymères éthylène/(méth)acrylate d'alkyle. Ces copolymères comprennent de 5 à 40 % et de préférence 10 à 40 % en poids de (méth)acrylate d'alkyle. Leur MFI est compris entre 0,5 et 200 g/10min (à 190°C sous 2,16 kg). Les (méth)acrylates d'alkyle ont déjà été décrits plus haut.

Selon une forme particulière de l'invention, les copolymères précédents peuvent être fonctionnalisés par copolymérisation ou par greffage par un anhydride d'acide carboxylique insaturé. Le greffage est une opération connue en soi.

L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (méth)acrylique.

S'agissant des copolymères à base d'éthylène, d'un comonomère et de l'anhydride d'acide carboxylique insaturé, c'est-à-dire ceux dans lesquels l'anhydride d'acide carboxylique insaturé n'est pas greffé, il s'agit des copolymères de l'éthylène, de l'anhydride d'acide carboxylique insaturé et d'un autre monomère choisi parmi les comonomères qu'on a cité plus haut pour les copolymères de l'éthylène.

On utilise avantageusement les copolymères éthylène/(méth)acrylate d'alkyle/anhydride maléique. Ces copolymères comprennent de 0 à 10 % en poids d'anhydride maléique et de 2 à 40 %, de préférence 5 à 40 % en poids de (méth)acrylate d'alkyle. Leur MFI est compris entre 0,5 et 200 g/10min (à 190°C sous 2,16 kg). Les (méth)acrylates d'alkyle ont déjà été décrits plus haut.

On peut utiliser un mélange de plusieurs copolymères (A), que ce soit un mélange de copolymères non fonctionnalisés, un mélange d'un copolymère fonctionnalisé et d'un copolymère non fonctionnalisé ou un mélange de deux copolymères fonctionnalisés.

A titre d'exemple, on peut aussi utiliser un mélange d'un copolymère éthylène/(méth)acrylate d'alkyle et d'un copolymère éthylène/(méth)acrylate d'alkyle/anhydride maléique.

Les copolymères (A) à l'acrylate non greffés sont disponibles dans le commerce. Ils sont produits par polymérisation radicalaire à une pression pouvant être comprise entre 200 et 2500 bars et sont vendus sous forme de granulés.

S'agissant du polypropylène (B), c'est un polypropylène homo- ou copolymère. A titre de comonomères, on peut citer :
- les alpha-oléfines, avantageusement celles ayant de 3 à 30 atomes de carbone. A titre d'exemples d'alpha-oléfines, on peut citer : le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène et le 1-triacontène, ces alphaoléfines peuvent être utilisées seules ou en mélange de deux ou de plus de deux ;
- les diènes ;
(B) peut être aussi un copolymère à blocs polypropylène.
A titre d'exemple de polymère (B), on peut
- le polypropylène ;
- les mélanges de polypropylène et d'EPDM ou d'EPR pouvant contenir en outre 1 à 20% de polyéthylène.

Avantageusement le polymère (B), qui peut être un mélange de plusieurs polymères, comprend au moins 50% et de préférence 75% en moles de propylène.

Le polypropylène (B) est choisi parmi ceux de qualité dite "extrusion couchage" ayant un MFI entre 20 et 40 g /10 min (à 230°C sous 2,16 kg).

S'agissant du polypropylène (C) fonctionnalisé par un anhydride d'acide carboxylique insaturé, c'est un polypropylène homo ou copolymère fonctionnalisé par greffage. A titre d'exemple, on peut citer l'acide acrylique, l'acide méthacrylique, l'acide maléique, l'acide fumarique, l'acide itaconique, l'acide crotonique, l'anhydride itaconique, l'anhydride nadique, l'anhydride maléique et les anhydrides maléiques substitués tel que par exemple l'anhydride diméthyle maléique.

Avantageusement, on greffe du polypropylène de MFI (abréviation de Melt Flow Index ou indice de fluidité à l'état fondu) 0,1 à 10 g/10 min à (à 230° C sous 2,16 kg) par de l'anhydride maléique en présence d'initiateurs tels que des peroxydes. La quantité d'anhydride maléique effectivement greffée peut être comprise entre 0,01 et 10 % en poids du polypropylène greffé. Le polypropylène greffé peut être dilué par du polypropylène, des caoutchoucs EPR, EPDM ou des copolymères du propylène et d'une alpha oléfine. On peut aussi, selon une autre variante, effectuer un cogreffage d'un mélange de polypropylène et d'EPR ou d'EPDM, c'est-à-dire ajouter un acide carboxylique insaturé, un anhydride ou leurs dérivés dans un mélange de polypropylène et d'EPR ou d'EPDM en présence d'un initiateur.

A titre d'autres exemples de (C), on peut citer les mélanges comprenant en poids :
- 0 à 50% et de préférence 10 à 40% d'au moins un polyéthylène ou un copolymère de l'éthylène ;
- 50 à 100% et de préférence 60 à 90% d'au moins un polymère choisi parmi le polypropylène ou un copolymère du propylène . Ces mélanges étant greffés par un monomère fonctionnel choisi parmi les anhydrides d'acides dicarboxyliques insaturés, ces mélanges greffés étant éventuellement dilués dans au moins une polyoléfine comprenant essentiellement des motifs propylène ou dans au moins un polymère à caractère élastomérique ou dans leur mélange.

Avantageusement (C) contient 0,8 à 4,5 % en poids d'anhydride maléique.

La proportion de (C) dans le liant dépend de la quantité d'anhydride maléique, selon une forme préférée si (C) contient de 1,5 à 6 % en poids d'anhydride il suffit d'en mettre 1,5 à 6% dans le liant. Selon une autre forme préférée si (C) contient de 0,8 à 1,5 % en poids d'anhydride il suffit d'en mettre 10 à 25% dans le liant.

Selon une autre forme préférée, si (C) contient de 1,5 à 3 % en poids d'anhydride, il suffit d'en mettre 3 à 5 % dans le liant.

Le liant est fabriqué par mélange à l'état fondu des différents constituants (A), (B) et (C) dans les dispositifs habituels de mélange des thermoplastiques tels que les mélangeurs, les extrudeuses.

Le liant peut aussi contenir des additifs tels que des antioxydants, des agents antibloquants, des agents de mise en oeuvre tels que des polymères fluorés, ces additifs étant utilisés aux taux usuels connus par l'homme de l'art.

Le liant peut contenir les additifs utilisés habituellement lors de la mise en oeuvre des polyoléfines à des teneurs comprises entre 10 ppm et 5% en poids, tels que les antioxydants à base de molécules phénoliques substituées, les agents de protections UV, les agents de mise en oeuvre tels que les amides gras, l'acide stéarique et ses sels, les polymères fluorés connus comme agents permettant d'éviter les défauts d'extrusion, les agents anti-buée à base d'amines, les agents anti-bloquants tels que la silice ou le talc, les mélanges maîtres avec un ou des colorants et les agents nucléants entre autres.

La présente invention concerne une structure comprenant successivement une feuille d'un métal ou d'un substrat métallisé, une couche du liant précédent et éventuellement une couche de polypropylène. Cette structure est utile pour faire des opercules d'emballages. L'invention concerne aussi ces opercules et les emballages fermés avec ces opercules.

S'agissant de la structure comprenant successivement une feuille d'un métal ou d'un substrat métallisé, une couche du liant précédent et éventuellement une couche de polypropylène, on peut citer, à titre d'exemple de métal, l'Aluminium, l'Acier, le Fer blanc et les substrats métallisés tels que le polyester (PET). Les épaisseurs sont respectivement par exemple en µm 20 /10 /10.Le polypropylène de la couche éventuelle disposée contre le liant peut être choisi parmi les polypropylènes cités pour (B).

La présente invention concerne également un opercule comprenant la structure selon l'invention. Les opercules comprennent généralement une feuille d'aluminium sur laquelle est couchée par extrusion couchage une couche de liant elle-même éventuellement couchée sur une couche de polypropylène, formant dans ce cas une structure en sandwich (Al/liant/PP). On obtient ainsi une structure multicouche manipulable. On peut ensuite procéder à la réactivation du liant par un traitement thermique consistant à porter l'ensemble à une température comprise entre 160 et 300°C pendant quelques secondes. Ce traitement thermique de réactivation du liant, en augmentant ses propriétés adhésives, a pour effet de rendre indélaminable la couche métallique et la couche de liant. En fonction de la température de fusion du liant, de la nature de la couche métallique et du résultat souhaité, on détermine la durée et la température du traitement thermique. La température du traitement thermique doit en tout cas être supérieure ou égale à la température de fusion du liant et inférieure à la température de fusion de la couche de polypropylène lorsque celle-ci est présente dans la structure. Le traitement thermique peut être réalisé en ligne à la suite de l'extrusion couchage ou ultérieurement, l'adhésion entre la couche métallique et le liant avant le traitement thermique étant suffisante pour permettre la formation de bobines et le déroulement des bobines.

Les opercules sont ensuite soudés à chaud sur des récipients en polypropylène ou des barquettes soit en polypropylène soit en un matériau recouvert de polypropylène, ledit matériau pouvant être de l'aluminium, du polyester ou du polystyrène.

Des tests de pelage ont été réalisés sur des opercules (4) et des emballages comprenant un opercule (4) soudé sur une barquette (3) en polypropylène.

Les opercules (4) utilisés dans ces tests ont une structure bicouche (voir figures 1a et 2a) comprenant une couche d'aluminium (5) de 30µm d'épaisseur et une couche de liant (6) de 30µm d'épaisseur. Cette structure multicouche est obtenue par extrusion couchage de la couche de liant sur la couche d'aluminium. Puis la structure subit un passage dans un tunnel d'air chaud régulé à une température supérieure à 220°C durant quelques secondes afin de réactiver le liant et obtenir une adhésion élevée. C'est ce qu'on appelle le traitement thermique. L'opercule (4) est ensuite soudé sur la barquette (3). Au cours de cette soudure, la couche de liant (6) est directement soudée contre la barquette en polypropylène. On obtient alors un emballage tel que représenté sur la figure 1a. Le liant (6) utilisé pour ces tests, comprend en poids 17 % de PP greffé avec 0,8% en poids d'anhydride maléique (MAH), 17% d'un terpolymère éthylène/acrylate d'éthyle/MAH dans des proportions en poids respectivement 68/30/2 et 66% de PP homopolymère de couchage.

Des essais de pelage entre la couche d'aluminium (5) et la couche de liant (6) ont été menés sur trois opercules de structure et composition, telles que décrites précédemment, avant traitement thermique et après traitement thermique (passage pendant quelques secondes sous un tunnel d'air chaud régulé à une température supérieure à 220°C). La force de pelage a été mesurée à une vitesse de 100mm/min selon la norme NFT 54120 et NFT 54122. Ces forces de pelage, avant traitement thermique, sur trois opercules se sont avérées non mesurables car trop faibles, tandis que celles après traitement thermique caractérisent une structure indélaminable.

On constate clairement que le traitement thermique permet d'obtenir une structure : couche métallique (5)/couche de liant (6), indélaminable.

La force de pelage ou d'ouverture de l'opercule par rapport à la barquette a ensuite été mesurée à une vitesse de 200mm/min selon la norme NFT 54120 et la norme NFT 54122. Trois emballages (opercule + barquette) ont été préparés et les résultats obtenus sont regroupés dans le **TABLEAU 1** ci-dessous.

**TABLEAU 1**

| Emballage | Force de pelage (N/15mm) |
|---|---|
| Emballage n°1 | 10-13 |
| Emballage n°2 | 9-11,5 |
| Emballage n°3 | 9-11 |

L'ouverture de ces emballages a eu lieu de façon propre et nette, sans déchirure de l'opercule ailleurs qu'au niveau de la zone de soudure telle que représentée sur la figure 2a.

Les valeurs de forces de pelage obtenues permettent de mettre en évidence la pelabilité facile des opercules et donc l'ouverture aisée des emballages comprenant de tels opercules.

Les mêmes tests de pelage ont été réalisés sur des :
- opercules tricouches avec une couche de PP (7) de 30µm d'épaisseur, une couche de liant (6) de 30µm d'épaisseur et une couche d'Al (5) de 30µm d'épaisseur;
- opercules bicouches comprenant une couche de PET métallisée (5) de 30µm d'épaisseur et une couche de liant (6) de 30µm d'épaisseur ;
- opercules tricouches comprenant une couche de PET métallisée (5) de 30µm d'épaisseur, une couche de liant (6) de 30µm d'épaisseur et une couche de PP (7) de 30µm d'épaisseur
ainsi que sur des emballages comprenant une barquette en PP et de tels opercules, le liant (6) étant celui tel que décrit dans l'exemple précédent. Ces tests ont donnés sensiblement les mêmes valeurs que celles regroupées dans le **TABLEAU 1.**

Le liant utilisé dans l'invention a de bonnes performances adhésives sur les métaux (Aluminium, Acier, Fer blanc, substrats métallisés), ces performances adhésives étant suffisantes dès l'extrusion couchage pour garantir une bonne stabilité dimensionnelle des structures pendant la fabrication.

Le liant a une excellente aptitude à la coextrusion couchage à haute vitesse. On peut l'étirer en extrusion couchage à des vitesses supérieures à 100 m/min sans donner lieu à des effets parasites d'instabilité de largeur.

Le liant a aussi de bonnes caractéristiques de scellage/pelage permettant en particulier d'obtenir lors du scellage une excellente garantie au niveau de l'étanchéité des emballages et lors du pelage une ouverture facile, progressive, et sans dépôt.

Un autre avantage du liant est une très bonne inertie chimique garantissant de bonnes propriétés orgaloleptiques :absence de goût ou d'odeur,
une bonne résistance des emballages en milieu agressif (aliments acides) et une bonne tenue à la stérilisation à la vapeur.

## Revendications

1. Emballage comprenant un opercule (4) soudé sur une barquette (3) en polypropylène ou en matériau recouvert d'une couche (2) de polypropylène, l'opercule (4) comprenant une structure multicouche comprenant une couche métallique ou une couche d'un substrat métallisé (5) et une couche de liant (6) de coextrusion couchage, cette dernière étant prise en sandwich entre la couche métallique ou de substrat métallisé (5) et la barquette (3) en polypropylène ou la couche de polypropylène (2) de la barquette (3), ledit liant comprenant:
- 5 à 30% en poids d'un copolymère à base d'éthylène (A) avec un ou des comonomères choisis parmi le groupe des esters d'acides carboxyliques, des esters vinyliques et des diènes ;
- 40 à 93% en poids d'un polypropylène (B) homopolymère, de qualité dite « extrusion couchage », étirable, l'étirabilité étant définie comme la non rupture d'un jonc extrudé à une température entre 190°C et 240°C et soumis à une traction à une vitesse de tirage entre 50 et 250 m/min et ayant un MFI entre 20 et 40 g/10 min (à 230°C sous 2,16 kg);
- 2 à 30% en poids d'un polypropylène (C) fonctionnalisé par un anhydride d'acide carboxylique insaturé ;
le MFI, indice de fluidité à l'état fondu de la composition étant compris entre 10 et 50 g/ 10 min (à 230°C sous 2,16kg)
l'opercule (4) étant pelable par une rupture cohésive dans la couche dudit liant (6) au niveau de sa zone de soudure dudit opercule sur la barquette.

2. Emballage selon la revendication 1, **caractérisé en ce que** la structure multicouche de l'opercule (4) comprend une couche de polypropylène (7) présentant une température de fusion supérieure à la température de fusion du liant, les couches solidaires les unes des autres étant dans l'ordre : la couche métallique ou de substrat métallisé (5), la couche de liant (6) et la couche de polypropylène (7).

3. Emballage selon l'une des revendications précédentes, **caractérisé en ce que** le copolymère (A) du liant est greffé par de l'anhydride maléique.

4. Emballage selon l'une des revendications précédentes, **caractérisé en ce que** le métal de la couche métallique ou de la couche de substrat métallisé (5) est l'aluminium.

5. Emballage selon l'une des revendications précédentes, **caractérisé en ce qu'**il est stérilisable et résistant aux acides alimentaires, graisses et solvants techniques.

6. Procédé d'ouverture d'un emballage selon l'une des revendications précédentes, **caractérisé en ce que** en tirant sur l'opercule (4), on engage une rupture cohésive à l'intérieur de la couche de liant (6) de l'opercule (4) au niveau de la zone de soudure dudit opercule (4) sur la barquette (3) puis une déchirure de la couche de liant (6) interrompant la rupture cohésive aux endroits où l'opercule (4) n'était pas soudé à la barquette (3).

7. Utilisation d'un liant de coextrusion couchage comprenant:
- 5 à 30% en poids d'un copolymère à base d'éthylène (A) avec un ou des comonomères choisis parmi le groupe des esters d'acides carboxyliques, des esters vinyliques et des diènes ;
- 40 à 93% en poids d'un polypropylène (B) homopolymère, de qualité dite « extrusion couchage », étirable, l'étirabilité étant définie comme la non rupture d'un jonc extrudé à une température entre 190°C et 240°C et soumis à une traction à une vitesse de tirage entre 50 et 250 m/min et ayant un MFI entre 20 et 40 g/10 min (à 230°C sous 2,16 kg);
- 2 à 30% en poids d'un polypropylène (C) fonctionnalisé par un anhydride d'acide carboxylique insaturé ;
le MFI, indice de fluidité à l'état fondu de la composition étant compris entre 10 et 50 g/ 10 min (à 230°C sous 2,16kg) ;
pour fabriquer un opercule (4) comprenant une structure multicouche comprenant une couche métallique ou une couche d'un substrat métallisé (5) et une couche dudit liant, ledit opercule étant soudé sur une barquette (3) en polypropylène ou en matériau recouvert d'une couche (2) de polypropylène, la couche de liant (6) étant prise en sandwich entre la couche métallique ou de substrat métallisé (5) et la barquette (3) en polypropylène ou la couche de polypropylène (2), l'opercule étant pelable par rupture cohésive au niveau de la zone de soudure.

8. Utilisation selon la revendication 7, **caractérisée en ce que** la structure multicouche de l'opercule (4) comprend une couche de polypropylène (7) présentant une température de fusion supérieure à la température de fusion du liant, les couches solidaires les unes des autres étant dans l'ordre : la couche métallique ou de substrat métallisé (5), la couche de liant (6) et la couche de polypropylène (7).

## Claims

1. Package comprising a lid (4) welded to a tray (3) made of polypropylene or a material covered with a polypropylene layer (2), the lid (4) comprising a multilayer structure comprising a metal layer or a layer of a metallized substrate (5) and a coextrusion-coating tie layer (6), the tie layer being sandwiched between the metal layer or metallized substrate (5) and the polypropylene tray (3) or the polypropylene layer (2) of the tray (3), the said tie comprising:
- 5 to 30% by weight of a copolymer (A) based on ethylene and one or more comonomers chosen from the group of carboxylic acid esters, vinyl esters and dienes;
- 40 to 93% by weight of a stretchable homopolymer polypropylene (B), of "extrusion-coating" grade, stretchability being defined as the ability of a rod extruded at a temperature of between 190°C and 240°C and pulled at a pull rate of between 50 and 250 m/min. not to break, and having an MFI of between 20 and 40 g/10 min. (at 230ºC/2.16 kg);
- 2 to 30% by weight of a polypropylene (C) functionalized by an unsaturated carboxylic acid anhydride;
the MFI (melt flow index) of the composition being between 10 and 50 g/10 min. (at 230°C/2.16 kg);

2. Package according to Claim 1, **characterized in that** the multilayer structure of the lid (4) comprises a layer of polypropylene (7) having a melting point above the melting point of the tie, the layers being fastened together in the following order: the metal layer or metallized substrate (5), the tie layer (6) and the polypropylene layer (7).

3. Package according to either of the preceding claims, **characterized in that** the copolymer (A) of the tie is grafted by maleic anhydride.

4. Package according to one of the preceding claims, **characterized in that** the metal of the metal layer or of the metallized substrate layer (5) is aluminium.

5. Package according to one of the preceding claims, **characterized in that** it is sterilizable and resistant to food acids and high-performance solvents and greases.

6. Method of opening a package according to one of the preceding claims, **characterized in that** pulling on the lid (4) induces cohesive failure within the tie layer (6) of the lid (4) in the region where the said lid (4) is welded to the tray (3) followed by tearing of the tie layer (6), interrupting the cohesive failure at the points where the lid (4) is not welded to the tray (3).

7. Use of a coextrusion-coating tie comprising:
- 5 to 30% by weight of a copolymer (A) based on ethylene and one or more comonomers chosen from the group of carboxylic acid esters, vinyl esters and dienes;
- 40 to 93% by weight of a stretchable homopolymer polypropylene (B), of "extrusion-coating" grade, stretchability being defined as the ability of a rod extruded at a temperature of between 190°C and 240°C and pulled at a pull rate of between 50 and 250 m/min. not to break, and having an MFI of between 20 and 40 g/10 min. (at 230ºC/2.16 kg);
- 2 to 30% by weight of a polypropylene (C) functionalized by an unsaturated carboxylic acid anhydride;
the MFI (melt flow index) of the composition being between 10 and 50 g/10 min. (at 230°C/2.16 kg);
in order to manufacture a lid (4) comprising a multilayer structure comprising a metal layer or a layer of a metallized substrate (5) and a layer of the said tie, the said lid being welded to a tray (3) made of polypropylene or of a material covered with a polypropylene layer (2), the tie layer (6) being sandwiched between the metal or metallized substrate layer (5) and the polypropylene tray (3) or the polypropylene layer (2), the lid being able to be peeled off by cohesive failure within the welding region.

8. Use according to Claim 7, **characterized in that** the multilayer structure of the lid (4), comprises a polypropylene layer (7) having a melting point above the melting point of the tie, the layers being fastened together in the following order: the metal or metallized substrate layer (5), the tie layer (6) and the polypropylene layer (7).

## Patentansprüche

1. Verpackung, welche einen Deckel (4) umfasst, der auf ein Schälchen (3) aus Polypropylen oder aus einem mit einer Schicht (2) aus Polypropylen beschichteten Material geschweißt ist, wobei der Deckel (4) eine mehrschichtige Struktur umfasst, umfassend eine Schicht aus Metall oder eine Schicht aus einem metallisierten Substrat (5) und eine Schicht aus einem Bindemittel (6) zur Coextrusionsbeschichtung, wobei Letztere zwischen die Schicht aus Metall oder dem metallisierten Substrat (5) und das Schälchen (3) aus Polypropylen oder die Schicht aus Polypropylen (2) des Schälchens (3) in Form eines Sandwichs eingebracht ist, wobei das Bindemittel Folgendes umfasst:
- 5 bis 30 Gew.-% eines Copolymers auf der Basis von Ethylen (A) mit einem oder mehreren Comonomeren, die aus der Gruppe mit Carbonsäureestern, Vinylestern und Dienen ausgewählt sind;
- 40 bis 93 Gew.-% eines Polypropylen-Homopolymers (B) mit so genannter "Extrusionsbeschichtungs"-Qualität, das streckbar ist, wobei die Streckbarkeit durch das Nicht-Reißen eines Stabs definiert ist, der bei einer Temperatur zwischen 190°C und 240°C extrudiert und einem Zug mit einer Verstreckungsgeschwindigkeit zwischen 50 und 250 m/min unterworfen wird und einen MFI zwischen 20 und 40 g/10 min (bei 230°C unter 2,16 kg) aufweist;
- 2 bis 30 Gew.-% eines Polypropylens (C), das durch ein Anhydrid einer ungesättigten Carbonsäure funktionalisiert ist;
wobei der MFI, der Schmelzflussindex, der Zusammensetzung zwischen 10 und 50 g/10 min (bei 230°C unter 2,16 kg) beträgt
und der Deckel (4) durch einen Kohäsionsbruch in der Schicht des Bindemittels (6) in Höhe der Verschweißungszone des Deckels auf dem Schälchen abziehbar ist.

2. Verpackung nach Anspruch 1, **dadurch gekennzeichnet, dass** die mehrschichtige Struktur des Deckels (4) eine Schicht aus Polypropylen (7) umfasst, die eine Schmelztemperatur oberhalb der Schmelztemperatur des Bindemittels aufweist, wobei die miteinander verbundenen Schichten die folgende Reihenfolge besitzen: die Schicht aus Metall oder dem metallisierten Substrat (5), die Bindemittelschicht (6) und die Schicht aus Polypropylen (7).

3. Verpackung nach einem der vorgehenden Ansprüche, **dadurch gekennzeichnet, dass** das Copolymer (A) des Bindemittels mit Maleinsäureanhydrid gepfropft ist.

4. Verpackung nach einem der vorgehenden Ansprüche, **dadurch gekennzeichnet, dass** das Metall der Schicht aus Metall oder der Schicht aus dem metallisierten Substrat (5) Aluminium ist.

5. Verpackung nach einem der vorgehenden Ansprüche, **dadurch gekennzeichnet, dass** sie sterilisierbar und beständig gegenüber Nahrungsmittel- und Fettsäuren und technischen Lösungsmitteln ist.

6. Verfahren zum Öffnen einer Verpackung nach einem der vorhergehenden Ansprüche, **dadurch gekennzeichnet, dass** durch Ziehen an dem Deckel (4) ein Kohäsionsbruch im Inneren der Bindemittelschicht (6) des Deckels (4) in Höhe der Verschweißungszone des Deckels (4) auf dem Schälchen (3) und anschließendes Zerreißen der Bindemittelschicht (6) eingeleitet wird, wobei der Kohäsionsbruch an den Stellen unterbrochen wird, an denen der Deckel (4) nicht mit dem Schälchen (3) verschweißt ist.

7. Verwendung eines Bindemittels zur Coextrusionsbeschichtung, welches Folgendes umfasst:
- 5 bis 30 Gew.-% eines Copolymers auf der Basis von Ethylen (A) mit einem oder mehreren Comonomeren, die aus der Gruppe mit Carbonsäureestern, Vinylestern und Dienen ausgewählt sind;
- 40 bis 93 Gew.-% eines Polypropylen-Homopolymers (B) mit so genannter "Extrusionsbeschichtungs"-Qualität, das streckbar ist, wobei die Streckbarkeit durch das Nicht-Reißen eines Stabs definiert ist, der bei einer Temperatur zwischen 190°C und 240°C extrudiert und einem Zug mit einer Verstreckungsgeschwindigkeit zwischen 50 und 250 m/min unterworfen wird und einen MFI zwischen 20 und 40 g/10 min (bei 230°C unter 2,16 kg) aufweist;
- 2 bis 30 Gew.-% eines Polypropylens (C), das durch ein Anhydrid einer ungesättigten Carbonsäure funktionalisiert ist;
wobei der MFI, der Schmelzflussindex, der Zusammensetzung zwischen 10 und 50 g/10 min (bei 230°C unter 2,16 kg) beträgt,
zur Herstellung eines Deckels (4), umfassend eine mehrschichtige Struktur, die eine Schicht aus Metall oder eine Schicht aus einem metallisierten Substrat (5) und eine Schicht aus dem Bindemittel umfasst, wobei der Deckel auf ein Schälchen (3) aus Polypropylen oder einem mit einer Schicht (2) aus Polypropylen beschichteten Material geschweißt wird, wobei die Bindemittelschicht (6) zwischen die Schicht aus Metall oder dem metallisierten Substrat (5) und das Schälchen (3) aus Polypropylen oder die Schicht aus Polypropylen (2) in Form eines Sandwichs eingebracht wird und der Deckel durch einen Kohäsionsbruch in Höhe der Schweißzone abziehbar ist.

8. Verwendung nach Anspruch 7, **dadurch gekennzeichnet, dass** die mehrschichtige Struktur des Deckels (4) eine Schicht aus Polypropylen (7) umfasst, die eine Schmelztemperatur oberhalb der Schmelztemperatur des Bindemittels aufweist, wobei die miteinander verbundenen Schichten die folgende Reihenfolge besitzen: die Schicht aus Metall oder dem metallisierten Substrat (5), die Bindemittelschicht (6) und die Schicht aus Polypropylen (7).
